(19) Europäisches Patentamt
European Patent Office
Office européen des brevets

(11) Publication number: 0 368 911 B1

(12) EUROPEAN PATENT SPECIFICATION

(45) Date of publication of patent specification: 05.01.94

(51) Int. Cl.5: C07F 7/00, B01J 31/12, B01J 31/18

(21) Application number: 88906756.7

(22) Date of filing: 25.07.88

(86) International application number: PCT/US88/02509

(87) International publication number: WO 89/00998 (09.02.89 89/04)

# (54) CATALYST COMPOSITION.

(30) Priority: 27.07.87 US 77905

(43) Date of publication of application: 23.05.90 Bulletin 90/21

(45) Publication of the grant of the patent: 05.01.94 Bulletin 94/01

(84) Designated Contracting States: AT BE CH DE FR GB IT LI LU NL SE

(56) References cited:
EP-A- 139 214
EP-A- 0 169 707
DE-A- 2 012 925
FR-A- 2 147 035
US-A- 4 526 725

(73) Proprietor: DEARDORFF, Donald L
43 Gould Place
East Greenwich, RI 02818(US)

(72) Inventor: DEARDORFF, Donald L
43 Gould Place
East Greenwich, RI 02818(US)

(74) Representative: Barz, Peter, Dr. et al
Patentanwälte Dipl.-Ing. G. Dannenberg
Dr. P. Weinhold, Dr. D. Gudel
Dipl.-Ing. S. Schubert, Dr. P. Barz
Siegfriedstrasse 8
D-80803 München (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

This invention is concerned with organometallic complexes which are new compositions and which are chelates of titanium. Complexes of the invention are chelates and hydrolyzed chelates derived from reacting equimolar quantities of tetra-alkyl titanates and dialkanolamines. The new chelates are highly active as catalysts in esterification reactions and exhibit surprising and unique reactivity in crosslinking, surface modification and complexing applications.

Compositions of the invention are related, in part, to U S-A-4 506 091 and 4 526 725 which are concerned with improvements in the art of titanium catalyzed esterification. Dialkanolamines are used in U S-A-4 506 091 as scavengers to assist in hydrolysis and removal of titanium residues in esterification reactions catalyzed by conventional alkoxy titanates, and dialkanolamines are also used in U S-A-4 526 725 to make new alkoxy titanium chelates that are more efficient catalysts as well as being more easily hydrolyzed for removal in refining of the ester products. Previous workers have used dialkanolamines to prepare titanium chelates that are soluble and stable in water. Bostwick in U S-A-2 824 114 uses a 4:1 excess of DEA with TPT to give a water soluble chelate. GB-A-613 426 discloses a hydrolized catalyst composition comprising ethanolamine and TBT in a 2:1 ratio. Brook in U S-A-3 892 791 uses mixtures of di- and tri-ethanolamines with glycols, as does Womersley in U S-A-4 159 209 to give products that are soluble and useful for thickening aqueous systems. In all these prior examples, an excess of chelating agent is required to make the titanium stable to water. It now is found that certain 1/1 adducts of dialkanolamines with alkoxy titanates are surprisingly stable to water and may be hydrolyzed in a controlled and predictable manner to give new chelates which are stable to further hydrolysis, exhibit exceptional activity in esterification reactions and in chemical reactivity as well. It is known from the disclosure of DE-A-2 012 925 that compositions of titanium chelates achieve stability in water by using an excess of chelating agents comprising combinations of alkanolamine and glycol chelating agents totalling two or more moles of chelate per mole of titanium. In FR-A-2 147 035, the compositions must be derived from titanium halides and are subject to complete and destructive hydrolysis by contact with water in contrast to compositions of the disclosure to follow which provide active titanium chelates that have only one mole equivalent of chelating agent per mole of titanium and are derived from tetra-isopropyl titanate and are stable to water.

In particular, this invention concerns chelates of titanium that are derived from reaction of tetra-isopropyl titanate in a 1/1 mole ratio with a dialkanolamine of the structure

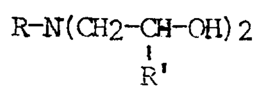

where R is hydrogen, phenyl or alkyl of 1 to 6 carbon atoms and R' is hydrogen or alkyl of 1 to 6 carbon atoms, to give an adduct which is Composition (I) and which may be subsequently hydrolyzed with just one equivalent of water to give a different chelate Composition (II) which is stable to further hydrolysis but is catalytically and chemically active.

A preferred form of the invention is demonstrated in the Examples below. In Example 1, tetra-isopropyl titanate, TPT, is reacted with one mole equivalent of diethanolamine to give a solution (I) comprising a chelate solute and two equivalents of essentially free isopropyl alcohol The chemical nature of (I) is surprising and provides a basic concept of the invention, Previously, it was supposed that this set and ratio of reactants was not sufficiently stable or of a monomeric nature to have practical utility without some further stabilization. Indeed, removal of free alcohol from (I) by distillation leaves a dark red and resinous residue, and ensure of the solution to atmosphere gives rapid hydrolysis and formation of solids, much in the manner of alkoxy titanates. For that reason, in U S-A-4 526 725 mentioned above, wherein (I) may be an intermediate in the synthesis of the alkoxy titanium chelates (ATC) disclosed therein, it was considered necessary to include higher alcohols in the compositions in order to avoid excessive sensitivity to moisture and loss of activity. Thus, it is consistent with the known art that the reaction of (I) with water is fast and highly exothermic. but it is surprising that the reaction of (I) with water may give different products depending on the conditions of te hydrolysis. Direct contact of (I) with water gives rapid and uncontrolled formation of intractable solids but hydrolysis of (I) in a judicious manner, such that water is made available to the titanium in a limiting way, gives a different and highly advantageous result, providing chelate compositions that are soluble and stable in water, yet are chemically and catalytically active.

As shown in Example 1, judicious hydrolysis of (I) may be effectively accomplished by simply evaporating the solution in a moist atmosphere. If care is taken to avoid heat and forcing conditions, the major product is a crystalline solid that is soluble in water and is highly active as catalyst in trans-esterifications. A similar, but better, purity product may be obtained by evaporating solutions obtained by hydrolysis of (I) with water diluted to about 5 per cent in alcohol. Great care is required in each of these procedures in order to avoid significant formation of gels and hard, intractable solids.

Although the hydrolysis methods described above and in Example 1 are inconvenient and do not give products that are well defined or of high purity for practical use, a method has been found that is convenient, highly effective and appears to be general for other members of the series. Thus, as in Example 2, the reaction of TPT in a 1/1 mole ratio with DEA that is hydrated with just one molecular equivalent of water, gives a clear and colorless solution that is designated Composition (II). Evaporation of (II) gives essentially 4 equivalents of free isopropyl alcohol distillate and a crystalline powder chelate residue (H-1) in an amount consistent with the formula $HN(CH_2CH_20\text{-})_2TiO$ and similar in appearance and in properties to the solids of Example 1, except that the crystals are completely soluble in water, glycols and lower alcohols to give clear solutions, free of cloudiness or insoluble residues, and without instability in heating or in storage.

The nature of the chelate solutes of Compositions (I) and (II) may best be described in terms of the chemical activity of their solutions. In addition to the unexpected results of hydrolysis described above, (I) also exhibits surprising catalytic activity, being more efficient than even TPT in that regard, as shown in Example 3, although having 33% less titanium that TPT. This is surprising since the 1/1 adduct of TPT and DEA appears to be a condensed resinous or polymeric product when separated from the alcohol solvent. But, as shown in Example 3, the use of (I) in solution form indicates that the chelate may be monomeric in activity and may be reacted in a controlled and predictable manner.

Also, it is found that (I) and (II) are similar in catalytic activity. Prior art indicates that hydrolysis of titanium with multiple alkoxy groups gives polymeric Ti-O-Ti-O-structures with a resultant loss of chemical and catalytic activity, but here it is demonstrated that the hydrolysis of (I) with one mole of water does not reduce the catalytic activity of the product, but provides a unique chelate that is reactive and exhibits real advantages of stability and utility.

Although the chelate of Composition (II) appears to be stable to further hydrolysis, it is fully active in terms of hydrogen bonding and complex formation. These are illustrated by its catalytic activity, reaction with carboxylic acids, as shown by titration with acetic acid in Example 2, and by the gelation and complexing with metal salts shown in Examples 4 and 5.

As it may be expected, modification of the structure in (II) causes a somewhat predictable variation in properties of the products. Thus, a product made with di-isopropanolamine (III) is equally active in catalysis but is slower to gel, requiring a temperature of 55 °C to cause rapid gelation. Substitution on the nitrogen also has large effects. Composition (IV) from N-t-butyl diethanolamine is soluble in water but does not appear to gel in concentrations of less that 50 per cent in water. The corresponding N-phenyl DEA chelate is quite insoluble in water and is equally active as catalyst on a titanium concentration basis.

EXAMPLE I

A 2-liter flask fitted with stir, thermometer, addition funnel and reflux condenser was purged with dry nitrogen and charged with 1136 g of tetra-isopropyl titanate (TPT). A quantity of 424 g of diethanolamine was added dropwise from the funnel while agitating and cooling the flask to maintain a temperature of 65 °C. The product, designated Composition I, is a clear, oily liquid with density of 1.015 g/cc @ 20 °C. Evaporation of 79 g of Composition I to constant weight at 15 torr and 70 °C gives 52.5 g of an amber glass residue. Reaction of Composition I with water is rapid and exothermic to give hard insoluble polymer-like gels which show no catalytic activity in reaction of diethylene glycol with dimethyl glutarate at 150 °C. Placing 28 g of Composition I in an evaporating dish and exposing to a low humidity atmosphere gives slow loss of isopropyl alcohol and formation of crystalline solids. After 48 hours exposure and intermittent stirring, there remained 13.1 g of white powder that is soluble in lower alcohols and water. This solid shows high activity as catalyst in reaction of DEG with dimethyl glutarate at 150 °C. A quantity of 390 g of Composition I was treated dropwise with a solution comprised of 18 g water in 360 g isopropyl alcohol with vigorous agitation and cooling to maintain 60 °C. Gels form early in the reaction but dissolve gradually to give clear to slightly cloudy reaction products. The amount of initial gels and residual cloudiness varies with water concentration and rate of addition. Solutions below 3% water give essentially clear liquid products. Evaporation of this solution with vacuum to constant weight gives a white crystalline powder residue in a quantity indicating a formula of $HN(CH_2CH_2O)_2TiO$ for the product which is similar to the solids received above in appearance, solubility, catalysis and analysis by IR.

EXAMPLE 2

A solution of 72 g of water in 424 g of diethanolamine was added slowly to 1136 g of TPT with rapid agitation and cooling to maintain a reaction temperature below 80 °C. Addition was complete in 60 minutes to give 1650 g of Composition II, a clear, oily liquid with Sp. Gr. (20 °C) = 1.015. Evaporating 56 g of Composition II under vacuum to 70 °C left 23.3 g of Composition H-1, a crystalline powder similar in appearance and solubility to the solid products of Example I except that solutions of H-1 in lower alcohols and water are clear and without residual insolubles. Compositions II and H-1, added in catalytic amounts to mixtures of DEG and dimethyl glutarate heated at 150 °C, show high catalytic activity in transesterification and are essentially equivalent on a Ti basis and with Composition I in that regard. Combining II with water gives clear solutions in all proportions. Solutions in water are stable in storage and heated to boiling, but gel at concentrations of more than 2% titanium. Titration of a 10% solution of II in water with 0.1 N acetic acid with phenolphthalein indicator gives sharp color change at one equivalent of acid addition, and with Congo Red indicator gives a fading end point at two equivalents of acid. Corresponding compounds were made in the same manner reacting TPT with other dialkanolamines hydrated with just one mole equivalent of water. The resulting compositions are shown in Table 1.

TABLE 1

| Reaction | Product | Properties |
|---|---|---|
| (1)TPT + (1)DEA | I | Clear liq., unstable to H2O |
| Dist. I (70°C/15mm) | | Amber glass + 2 eq. i-PrOH |
| 1)TPT + (1)DEA-$H_2O$ | II | Clear liq., sol. in $H_2O$ gel @2%Ti |
| Dist II(70°C/15mm) | H-1 | Wht cryst., sol. H2O, gels @ 2%Ti |
| (1)TPT +(1)DIPA-$H_2O$ | III | Clear liq., sol. $H_2O$, gels @ 2%Ti |
| Dist. III(70°C/15mm) | H-2 | wht.cryst.,sol.H2O,gel@2%Ti(60°C) |
| (1)TPT+(1)BDEA-H2O* | IV | clear yellow liq., col. H2O, gels on strong heating |
| Dist.IV(70°C/15mm) | H-3 | yellow powder, sol H2O, gels as IV |
| (1)TPT+(1)Ph-DEA-$H_2O$# | V | yel.solid/alc. mixture, insol $H_2O$ |

* N-t-butyl diethanolamine.

\# N-phenyl diethanolamine.

EXAMPLE 3

A standard esterification apparatus consisting of a 1-liter, 3-neck flask fitted with heating mantle, thermometer, nitrogen inlet tube and modified Dean-Start water separator topped with a total condenser and connected to a vacuum system was used to evaluate efficiency of catalysts using a reaction charge of 148 g (1m) phthalic anhydride, 312 g (2.4 m) 2-ethylhexyl alcohol and toluene as required to remove water by reflux. Catalyst was added in the type and amounts shown and reaction conducted in a standard manner of heating and nitrogen purge at the temperature listed until reaction was complete as determined by acid

number. At the end of reaction, products were obtained by removal of excess alcohol with vacuum to 20 torr/200 ° C followed by steam distillation at 150 ° C/75 torr during 30 minutes, cooling to 90 ° C and filtering the cloudy residue through a No. 1 Whatman paper. Catalysts are compared by appearance, color and acid number of products and by time of reaction. Data is collected in Table 2.

TABLE 2

| Example | Catalyst | | Reaction | | | Product | | |
|---|---|---|---|---|---|---|---|---|
| | Type | Wt.g. | T°C | Hrs | Final AV | Color | AV | Clarity |
| 6 | TBT | 0.2 | 220 | 3.0 | 0.1 | 20 | 0.14 | haze |
| 7 | C-I | 0.2 | 220 | 2.65 | 0.07 | 15 | 0.02 | clear |
| 8 | C-II | 0.2 | 220 | 2.7 | 0.04 | 10 | 0.04 | clear |
| 9 | H-1 | 0.25 | 220 | 1.75 | 0.02 | 15 | 0.02 | clear |
| 10* | Ex 9 | 0.25 | 220 | 2.25 | 0.07 | 20 | 0.02 | clear |
| 11 | C-III | 0.20 | 220 | 3.0 | 0.05 | 15 | 0.01 | sl.haze |
| 12** | Ex 11 | 0.25 | 220 | 3.5 | 0.04 | 20 | 0.04 | clear |
| 13 | H-3 | 0.1 | 220 | 3.0 | 0.06 | 30 | 0.04 | clear |
| 14 | TPT | 0.425 | 165 | 7.0 | 0.08 | 20 | 0.13 | haze |
| 15 | C-II | 0.425 | 165 | 6.75 | 0.06 | 15 | 0.04 | clear |
| 16 | C-II | 0.63 | 165 | 4.6 | 0.03 | 20 | 0.04 | clear |
| 17** | C-II | 0.81 | 165 | 4.25 | — | 20 | 0.04 | clear |

* Catalyst is residue filtered from Example 9.

** Catalyst is residue filtered from Example 11.

*** Equivalent in Ti concentration to Example 14.

EXAMPLE 4

A quantity of Composition II was placed in a tube and mixed dropwise with the amount of water shown. Time for gelation is listed along with appearance. Tubes were maintained at 25 ° C.

| Sample | Wt. II,g. | Wt. Water g | Gel Time, Min. |
|---|---|---|---|
| a | 4 | 4 | 0.5 clear,dry gel |
| b | 3 | 6 | 0.75 clear,dry gel |
| c | 2 | 6 | 2.0 clear,rubbery gel |
| d | 2 | 8 | 3.5 clear,soft gel |
| e | 2 | 10 | 10 clear,wet gel |
| f | 2 | 12 | (10 + ) clear,vis.liquid* |
| g | 2 | 14 | - clear liquid** |

* Liquid stable in storage 30 days

** Liquid stable in storage 6 months

A quantity of Composition III was placed in a tube and mixed dropwise with the amount water shown. Tubes were heated in an 85 ° C water bath. Temperature of gelation is listed along with appearance.

| Sample | Wt. III,g. | Wt. Water g | Gel.Temp.C. |
|---|---|---|---|
| a | 5 | 6.5 | 56-58 clear,dry gel |
| b | 5 | 9.75 | 60-65 cloudy,soft gel |
| c | 5 | 13 | 65-68 cloudy,viscous liq |

EXAMPLE 5

Solutions were prepared by dissolving 0.01 mole of the designated metal salts in 1000 ml of water. Aliquots of 10 ml were placed in tubes and treated dropwise with 2 ml of 2% aqueous (II). In each instance there was immediate formation of a flocculent precipitate.

| Solute | Precipitate |
|---|---|
| $MgCl_2$ | Brown |
| $FeSO_4$ | red/brown |
| $Cu(OAc)_2$ | blue |
| $CoCl_2$ | pink |
| $NiCl_2$ | white |
| $Al_2(SO_4)_3$ | white |

## Claims

**1.** Compositions which are hydrolysis products and which are comprised of the reaction products of essentially molecular equivalent quantities of tetra-isopropyl titanate and a dialkanolamine,

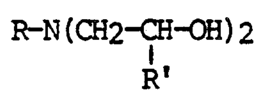

where R is hydrogen or phenyl or alkyl of 1 to 10 carbon atoms and R' is hydrogen or alkyl of 1 to 6 carbon atoms, combined with one molecular equivalent of water in a manner that the resultant composition has essentially 4 molecular equivalents of functionally free isopropyl alcohol and a chelate reaction product which exhibits a high level of catalytic activity and chemical reactivity consistent with the structure

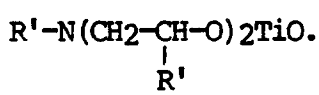

**2.** Compositions of Claim 1 wherein the manner of manufacturing the compositions consists of mixing the tetra-isopropyl titanate with a solution comprised of the appropriate molecular equivalent quantities of the dialkanolamine and water.

**3.** Compositions of Claim 1 or 2 where all or part of the functionally free alcohol is removed.

**4.** Compositions of Claim 1 or 2 where all or part of the functionally free alcohol is replaced by other solvent or mixture of solvents, said solvents being selected from the group of alcohols, glycols and water that may individually or in mixture thereof dissolve and maintain solution of the residues represented by the structure of Claim 1 and, wherein said alcohols are selected from the group of alkyl alcohols of 1 to 13 carbon atoms, and glycols are selected from the group of alkylene diols with 2 to 6 carbon atoms, diethylene glycol, dipropylene glycol and triethylene glycol.

## Patentansprüche

1. Zusammensetzungen, welche Hydrolyseprodukte sind und welche umfassen die Reaktionsprodukte von im wesentlichen moläquivalenten Mengen von Tetraisopropyltitanat und einem Dialkanolamin

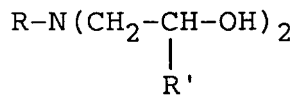

worin R Wasserstoff oder Phenyl oder Alkyl mit 1 bis 10 Kohlenstoffatomen ist und R' Wasserstoff oder Alkyl mit 1 bis 6 Kohlenstoffatomen ist, kombiniert mit einem Moläquivalent Wasser in solcher Weise, daß die resultierende Zusammensetzung im wesentlichen 4 Moläquivalente funktionell freies Isopropanol und ein Chelatreaktionsprodukt, welches ein hohes Maß an katalytischer Aktivität und chemischer Reaktivität zeigt, konsistent mit der Struktur

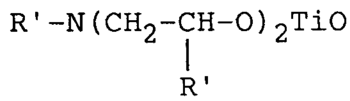

aufweist.

2. Zusammensetzungen nach Anspruch 1, worin die Herstellungsweise der Zusammensetzungen darin besteht, das Tetraisopropyltitanat mit einer Lösung zu vermischen, welche die entsprechenden moläquivalenten Mengen von Dialkanolamin und Wasser umfaßt.

3. Zusammensetzungen nach Anspruch 1 oder 2, worin der gesamte oder ein Teil des funktionell freien Alkohols entfernt ist.

4. Zusammensetzungen nach Anspruch 1 oder 2, worin der gesamte oder ein Teil des funktionalitätsfreien Alkohols durch ein anderes Lösungsmittel oder ein Lösungsmittelgemisch ersetzt ist, wobei die Lösungsmittel ausgewählt sind aus der Gruppe der Alkohole, Glykole und Wasser, welche individuell oder in Mischung die Rückstände, repräsentiert durch die Struktur von Anspruch 1, lösen und in Lösung halten und wobei die Alkohole ausgewählt sind aus der Gruppe der Alkylalkohole mit 1 bis 13 Kohlenstoffatomen und die Glykole ausgewählt sind aus der Gruppe der Alkylendiole mit 2 bis 6 Kohlenstoffatomen, Diethylenglykol, Dipropylenglykol und Triethylenglykol.

## Revendications

1. Compositions qui sont des produits d'hydrolyse et qui comprennent les produits de la réaction de quantités essentiellement équivalentes molaires de tétraisopropyltitanate et d'une dialcanolamine,

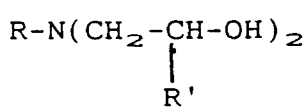

dans laquelle R est un atome d'hydrogène ou un groupe phényle ou alkyle de 1 à 10 atomes de carbone et R' est un atome d'hydrogène ou un groupe alkyle de 1 à 6 atomes de carbone, combiné avec un équivalent molaire d'eau de manière que la composition résultante ait essentiellement 4 équivalents molaires d'alcool isopropylique fonctionnellement libre et un produit réactionnel chélate qui présente un niveau élevé d'activité catalytique et une réactivité chimique cohérente avec la structure

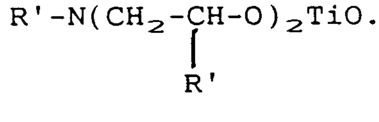

2. Compositions selon la revendication 1, dans lesquelles la manière de fabriquer les compositions consiste à mélanger le tétraisopropyltitanate avec une solution comprenant les quantités appropriées d'équivalent molaire de la dialcanolamine et d'eau.

3. Compositions selon la revendication 1 ou 2, où tout ou partie de l'alcool fonctionnellement libre est éliminé.

4. Compositions selon la revendication 1 ou 2, où tout ou partie de l'alcool fonctionnellement libre est remplacé par un autre solvant ou un mélange de solvants, lesdits solvants étant choisis dans le groupe des alcools, des glycols et de l'eau qui peuvent, individuellement ou en leur mélange, dissoudre et maintenir une solution des résidus représentés par la structure de la revendication 1 et, dans lesquelles lesdits alcools sont choisis dans le groupe des alcanols de 1 à 13 atomes de carbone, et les glycols sont choisis dans le groupe des alkylènediols ayant 2 à 6 atomes de carbone, et parmi le diéthylèneglycol, le dipropylèneglycol et le triéthylèneglycol.